# EUROPÄISCHE PATENTSCHRIFT

(11) **EP 4 562 349 B1**
(45) Veröffentlichungstag und Bekanntmachung des Hinweises auf die Patenterteilung: **11.11.2026**
(21) Anmeldenummer: 23734993.1
(22) Anmeldetag: 23.06.2023
(51) Int. Cl.: F23C 13/02, F17C 13/12

(54) **TANKANORDNUNG FÜR FLÜSSIGEN WASSERSTOFF UND VERFAHREN ZU DEREN BETRIEB**
TANK ASSEMBLY FOR LIQUID HYDROGEN, AND METHOD FOR OPERATING SAME
ENSEMBLE RÉSERVOIR POUR HYDROGÈNE LIQUIDE ET SON PROCÉDÉ DE FONCTIONNEMENT

(30) Priorität: 27.07.2022 DE 102022118834
(43) Veröffentlichungstag der Anmeldung: 04.06.2025
(73) Patentinhaber: Daimler Truck AG, 70771 Leinfelden-Echterdingen (DE)
(72) Erfinder: KÖLBIG, Mila, 70771 Leinfelden-Echterdingen (DE)
(74) Vertreter: JENSEN & SON
(86) Internationale Anmeldenummer: PCT/EP2023/067122
(87) Internationale Veröffentlichungsnummer: WO 2024/022688

(56) Entgegenhaltungen:
- WO-A1-03/062005
- DE-A1- 10 317 123
- JP-A- 2002 106 798
- US-A1- 2003 031 970

## Beschreibung

Die Erfindung betrifft eine Tankanordnung für flüssigen Wasserstoff gemäß dem Oberbegriff des Anspruchs 1 sowie ein Verfahren zum Betrieb der Tankanordnung gemäß dem Oberbegriff des Anspruchs 6.

Bei Betankungsverfahren für flüssigen Wasserstoff (sLH2) wird H₂ bei einer Temperatur von -240°C bis -248°C (25-33K) und bis zu 16 bar Druck gespeichert. Die Entnahme von Wasserstoff hat einen Kühleffekt, der den Tank auf Temperatur hält. Wird jedoch über längere Zeit kein Wasserstoff entnommen (Parken), steigt die Temperatur und damit der Druck mit der Zeit an. Wird der Maximaldruck des Tanks überschritten (-20 bar), wird Wasserstoff abgelassen, um ein Bersten des Tanks zu vermeiden. Dieser Wasserstoff muss zu Wasser umgewandelt werden, bevor er an die Umgebung abgegeben werden darf. Daher hat der sLH2-Tank ein Boil-off Management System (BOMS). Hier wird Wasserstoff katalytisch mit Sauerstoff zu Wasser reagiert und kann dann abgegeben werden. Dies muss auch bei sehr niedrigen Außentemperaturen von bis zu -40°C funktionieren. Die bisher vorgeschlagenen Katalysatoren funktionieren jedoch nicht ausreichend bei Umgebungstemperaturen von unter -20°C. Daher müssen sie vorgeheizt werden. Nach aktuellem Stand der Technik erfordert dies eine permanente Überwachung des Tanksystems, um das BOMS dann aktiv vorheizen zu können. Damit kann das Fahrzeug auch beim Parken nie ganz ausgeschaltet sein. Das jedoch soll unbedingt möglich sein, um Energie zu sparen und eine lange Parkdauer zu ermöglichen.

US 2003/0031970 A1 beschreibt ein Boil-Off-Gas-Aufbereitungssystem zum zuverlässigen Verbrennen eines Boil-Off-Gases. Das System verarbeitet ein Boil-off-Gas, das aus einem Tank für flüssigen Wasserstoff erzeugt wird, der in ein mit Wasserstoff betriebenes Fahrzeug eingebaut ist. Das System umfasst eine Mischvorrichtung zum Einführen von Luft in einen Auslasskanal, durch den das Boil-off-Gas aus dem Tank für flüssigen Wasserstoff strömt, und zum Mischen der Luft und des Boil-off-Gases und zum Ausgeben eines gemischten Gases; eine katalytische Brennkammer zum Verbrennen des Mischgases, das durch die Mischvorrichtung gemischt wurde, wobei die katalytische Brennkammer einen Einlass, durch den das Mischgas eingeführt wird, und einen Auslass zum Abführen von Verbrennungsgas aufweist; eine elektrische Heizung, die an der Einlassseite des katalytischen Brenners vorgesehen ist; und einen Steuerabschnitt zum Steuern der Energieversorgung der elektrischen Heizvorrichtung.

DE 103 17 123 A1 offenbart eine energieneutrale Methode zur Verbesserung der Kaltstartperformance von Brennstoffzellen. Die Brennstoffzellen bestehen aus einer Elektrolyt-Elektroden-Einheit mit Anode und Kathode sowie Strömungsmodulen für Prozessgase und Kühlmittel. Zur Vorwärmung wird eine externe Metallhydrid-Heizeinrichtung vorgeschaltet, die ein Material enthält, das ein Metallhydrid bilden kann. Die dabei freigesetzte Wärme wird zur Beheizung der Brennstoffzelle genutzt, ohne zusätzlichen Kraftstoffverbrauch.

Der Erfindung liegt die Aufgabe zu Grunde, eine neuartige Tankanordnung für flüssigen Wasserstoff sowie ein neuartiges Verfahren zu deren Betrieb anzugeben.

Die Aufgabe wird erfindungsgemäß gelöst durch eine Tankanordnung mit den Merkmalen des Anspruchs 1 und durch ein Verfahren zum Betrieb der Tankanordnung mit den Merkmalen des Anspruchs 6.

Vorteilhafte Ausgestaltungen der Erfindung sind Gegenstand der Unteransprüche.

Eine erfindungsgemäße Tankanordnung umfasst einen Tank für flüssigen Wasserstoff, ein Boil-off-Management-System mit einem Katalysator und einen Heizer. Der Heizer kann wasserstoffseitig hinter einem ersten Überdruckventil angeordnet und thermisch mit dem Katalysator verbunden sein, wobei das erste Überdruckventil dazu konfiguriert ist, bei Überschreitung eines vorgegebenen ersten Drucks zu öffnen. Erfindungsgemäß ist der Heizer als ein passiver Metallhydrid-Heizer ausgebildet, der ein Metallhydrid enthält. Ein zweites Überdruckventil kann zwischen dem ersten Überdruckventil und dem Katalysator angeordnet sein, wobei das zweite Überdruckventil dazu konfiguriert ist, bei Überschreitung eines vorgegebenen zweiten Drucks zu öffnen, der höher als der erste Druck ist.

In einer Ausführungsform ist der Heizer ohne eine elektrische Heizmöglichkeit ausgebildet.

In einer Ausführungsform ist der Heizer dazu konfiguriert, Wärme mit dem Katalysator über Wärmeleitung auszutauschen.

In einer Ausführungsform beträgt der vorgegebene erste Druck 16 bar bis 25 bar.

In einer Ausführungsform beträgt der vorgegebene zweite Druck 0.1 bar bis 5 bar über dem ersten Druck.

Gemäß einem Aspekt der vorliegenden Erfindung wird ein Verfahren zum Betrieb einer Tankanordnung vorgeschlagen, umfassend einen Tank für flüssigen Wasserstoff, ein Boil-off-Management-System mit einem Katalysator und einem Heizer, der wasserstoffseitig hinter einem ersten Überdruckventil angeordnet und thermisch mit dem Katalysator verbunden ist, wobei das erste Überdruckventil bei Überschreitung eines vorgegebenen ersten Drucks öffnet und Wasserstoff zum Heizer leitet. Erfindungsgemäß ist der Heizer als ein passiver Metallhydrid-Heizer ausgebildet, der ein Metallhydrid enthält, das reversibel mit Wasserstoff reagiert, wobei ein zweites Überdruckventil zwischen dem ersten Überdruckventil und dem Katalysator angeordnet ist, wobei das zweite Überdruckventil bei Überschreitung eines vorgegebenen zweiten Drucks, der höher als der erste Druck ist, öffnet und Wasserstoff zum Katalysator leitet.

In einer Ausführungsform erfolgt im Heizer keine aktive Heizung, insbesondere keine elektrische Heizung.

In einer Ausführungsform beträgt der vorgegebene erste Druck 16 bar bis 25 bar.

In einer Ausführungsform beträgt der vorgegebene zweite Druck 0.1 bar bis 5 bar über dem ersten Druck.

Gemäß einem Aspekt der vorliegenden Erfindung wird ein Verfahren zum Einbau eines Metallhydrids in einen Behälter eines passiven Metallhydrid-Heizers für die oben beschriebene Tankanordnung vorgeschlagen, wobei das Metallhydrid vor einer Aktivierung unter Luftkontakt eingebaut wird und die Aktivierung im eingebauten Zustand erfolgt, wobei entweder ein Vakuum appliziert oder mit Inertgas gespült wird, um Luft zu entfernen, und dann ein Druckwechsel mit Wasserstoff und/oder Temperaturwechsel in Vakuum oder Wasserstoffatmosphäre für die Aktivierung vorgenommen wird.

Gemäß einem weiteren Aspekt der vorliegenden Erfindung wird ein Verfahren zum Einbau eines Metallhydrids in einen Behälter eines passiven Metallhydrid-Heizers für die oben beschriebene Tankanordnung vorgeschlagen, wobei beide Überdruckventile geschlossen werden und anschließend ein aktiviertes Metallhydrid unter einer Inertatmosphäre in den Behälter eingebaut wird, wobei Leitungen zum Behälter dann evakuiert und gespült werden, bevor die Überdruckventile zum Metallhydrid geöffnet und der passive Metallhydrid-Heizer gespült wird, um das Intertgas zu entfernen.

Die erfindungsgemäße Lösung umfasst eine passive Metallhybrid-Heizvorrichtung, geeignet für sLH2-Boil-off Katalysatoren, ohne dass aktive Überwachung und/oder elektrische Energie zum Heizen erforderlich ist. Die Vorrichtung ermöglicht eine passive Vorheizung des BOMS (Boil Off Management System) und somit die erforderliche komplette Abschaltung der Fahrzeugelektronik beim Parken.

Der Heizer kann darüber hinaus überall dort angewandt werden, wo Wärmebedarf und Wärmeaufkommen zeitlich versetzt entsteht.

Ausführungsbeispiele der Erfindung werden im Folgenden anhand von Zeichnungen näher erläutert.

Dabei zeigen:
- Fig. 1: eine schematische Ansicht einer Anordnung, umfassend einen Tank für flüssigen Wasserstoff, ein Boil-off-Management-System mit einem Katalysator und einen passiven Metallhydrid-Heizer, und
- Fig. 2: ein schematisches Van't Hoff-Diagramm.

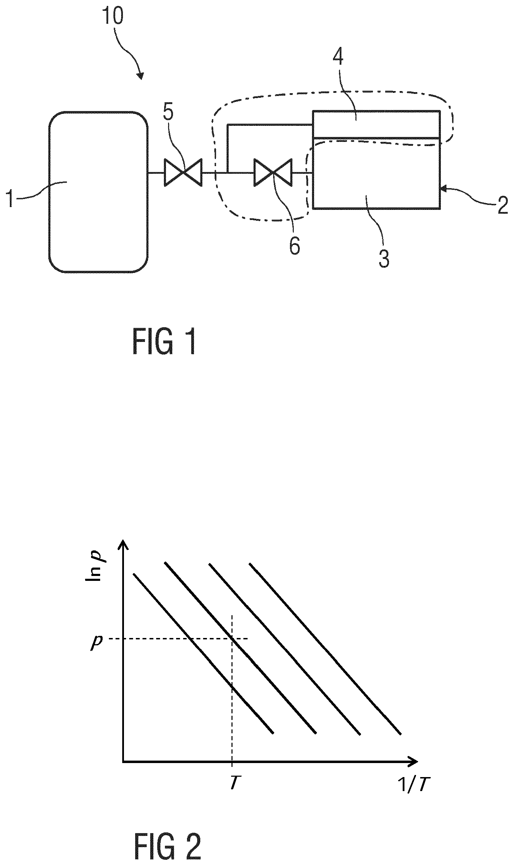

Figur 1 ist eine schematische Ansicht einer Tankanordnung 10, umfassend einen Tank 1 für flüssigen Wasserstoff (sLH2), ein Boil-off-Management-System 2 (BOMS) mit einem Katalysator 3 und einen passiven Metallhydrid-Heizer 4 (pMH-Heizer).

Der passive Metallhydrid-Heizer 4 für Boil-off-Katalysatoren 3 ohne elektrische Energie basiert auf der exo-/endothermen Reaktion von Metallhydriden mit Wasserstoff. Metallhydride sind Metalllegierungen, die reversibel mit Wasserstoff reagieren. Die Reaktionsgleichung lautet: ${MeH}_{x} + \frac{1}{2} {yH}_{2} ↔ {MeH}_{x + y} + ΔH$

Bei der Absorption (Einlagerung) von Wasserstoff wird Wärme freigesetzt, die Reaktionsgleichung läuft von links nach rechts ab. Bei der Desorption (Freisetzung) von Wasserstoff wird Wärme aufgenommen, die Reaktionsgleichung läuft von rechts nach links ab. Diese Reaktion findet automatisch statt, ohne äußeres Zutun.

Der passive Metallhydrid-Heizer 4 wird wasserstoffseitig hinter ein erstes Überdruckventil 5 und vor das Boil-off-Management-System 2 gesetzt und ist thermisch mit dem Boil-off-Management-System 2 verbunden. Dabei erfolgt die Wärmeübertragung durch Wärmeleitung.

Wird ein vorgegebener Druck (beispielsweise 20 bar) überschritten, öffnet sich das erste Überdruckventil 5 und Wasserstoff strömt zum Metallhydrid im Metallhydrid-Heizer 4. Hier findet automatisch eine Absorptionsreaktion statt und Wärme wird freigesetzt. Die Wärme wird über Wärmeleitung an den Katalysator 3 des Boil-off-Management-Systems 2 übertragen und heizt diesen auf.

Durch die Anlagerung des Wasserstoffs in das Metallhydrid wird auch in dieser Zeit kein Wasserstoff an die Umgebung abgegeben. Wichtig ist hier die korrekte Auslegung des passive Metallhydrid-Heizers 4, insbesondere der korrekten Auswahl und Menge der Metalllegierung. Aufgrund der Druck-Temperatur-Korrelation bei der Metallhydrid-Wasserstoff-Reaktion (vgl. van't Hoff Diagramm, Figur 2) kann allein dadurch die Vorheiztemperatur und Vorheizdauer genau eingestellt werden, ohne dass es einer Regelung bedarf. Somit kann sowohl der Zeitpunkt als auch die Temperatur ohne Regelung und/oder Überwachung, also passiv stattfinden.

Wenn alle Plätze im Metallhydridgitter mit Wasserstoff belegt sind (MH ist voll oder gesättigt) und der Katalysator 3 vorgeheizt ist, steigt der Druck weiter an. Wird ein weiterer Druck-Schwellenwert überschritten (beispielsweise 20,5 bar), dann öffnet sich ein zweites Überdruckventil 6, das dem ersten Überdruckventil 5 nachgeschaltet ist. Dadurch fließt Wasserstoff durch das Boil-off-Management-System 2, insbesondere den Katalysator 3, und wird zu Wasser H₂O oxidiert. Der Katalysator 3 erwärmt sich aufgrund der Reaktion weiter.

Der nun wärmere Katalysator 3 gibt Wärme an den passiven Metallhydrid-Heizer 4 ab. Durch die erhöhte Temperatur steigt der Gleichgewichtsdruck im Metallhydrid über den Druck-Schwellenwert (beispielsweise 20,5 bar). Der eingelagerte Wasserstoff wird desorbiert (freigesetzt) und im Boil-off-Management-System 2, insbesondere dem Katalysator 3, oxidiert. Dadurch wird der passive Metallhydrid-Heizer 4 regeneriert und steht für das nächste Boil-off Event wieder zur Verfügung. Hierfür wird keine zusätzliche Energie benötigt, da die Wärme bei der Katalyse im Boil-off-Management-System 2 ohnehin entsteht.

Nachdem der erforderliche Wasserstoff im Boil-off-Management-System 2 oxidiert und abgelassen wurde, schließen die Überdruckventile 5, 6 wieder. Das gesamte System kühlt wieder auf Umgebungstemperatur ab und ist bereit für das nächste Boil-off-Event.

Für jede Metalllegierung gibt es einen definierten Zusammenhang zwischen Druck p und Temperatur T, bei der die Reaktion stattfindet. Sie wird im van't Hoff Diagramm dargestellt. Figur 2 ist ein schematisches van't Hoff-Diagramm.

Über die Materialauswahl kann man nun bestimmen, auf welchem Temperaturniveau bei welchem Druck p die Wärme erzeugt werden soll.

Im vorliegenden Fall wird eine Legierung benötigt, die bei 20 bar eine möglichst hohe Temperatur T erzeugt und gleichzeitig bei den Regenerationsbedingungen (gewünschte Katalysator-Temperatur, bei der die Regeneration beginnen soll) einen Druck p deutlich oberhalb von 20 bar erzeugt, beispielsweise 25 bar bei 50°C oder 100°C oder 300°C. Auch können weitere Eigenschaften (beispielsweise Kosten, Zyklenstabilität, Kinetik, Hysterese, Beladung etc.) bei der Auswahl eine Rolle spielen. Denkbar wären beispielsweise LaNiAl-Legierungen.

Aufgrund der hohen Energiedichte von Metallhydriden (z.B. 20 kJ/mol_H2) und der verhältnismäßig geringen Menge an Katalysator, die aufgeheizt werden muss, hat der Vorheizer das Potential eines geringen Gewichts und/oder Volumens und somit auch von geringen Materialkosten.

Ein Behälter für den passiven Metallhydrid-Heizer 4 muss folgende Aufgaben erfüllen:
- Fassen des Metallhydrid-Pulvers (beispielsweise etwa 100g und/oder etwa 50ml),
- Herstellen einer wasserstoffseitigen Verbindung,
- Ermöglichen der Wärmeübertragung auf den Katalysator 3,
- Temperaturbeständigkeit bis zur Regenerationstemperatur oder Maximaltemperatur des Katalysators 3 (beispielsweise etwa 400°C),
- Druckbeständigkeit bis zum Regenerationsdruck zuzüglich einer Sicherheitsreserve (beispielsweise etwa 20 bar bis 50 bar).

Außerdem wird zusätzlich das zweite Überdruckventil 6 benötigt.

Aktivierte Metallhydride dürfen in der Regel nicht mit Luft in Kontakt kommen. Daher bestehen zwei Möglichkeiten für den Einbau des Metallhydrids in den Behälter des passiven Metallhydrid-Heizers 4:
- Die Metalllegierung wird vor der Aktivierung unter Luftkontakt eingebaut. Die Aktivierung erfolgt dann im eingebauten Zustand. Dabei wird ein Vakuum appliziert, um Luft zu entfernen, und ein Druckwechsel mit Wasserstoffatmosphäre und/oder Temperaturwechsel (pressure swing, temperature swing) für die Aktivierung vorgenommen. Viele Legierungen lassen sich nach Luftkontakt unter moderaten Druck-/Temperatur-Bedingungen aktivieren, dies muss im Einzelfall überprüft werden.
- Es wird ein aktiviertes Metallhydrid in Inertatmosphäre eingebaut. Dies ist möglich, wenn der Abschluss des Behälters durch beide Überdruckventile 5, 6 umgesetzt wird. Die Leitungen müssen dann evakuiert und gespült werden, bevor die Überdruckventile 5, 6 zum Metallhydrid öffnen und den passiven Metallhydrid-Heizer 4 spülen. Hierbei muss das Intertgas ausreichend gut entfernt werden.

Die Tankanordnung 10 kann beispielsweise in einem Fahrzeug, insbesondere einem Nutzfahrzeug oder einem Bus, zum Einsatz kommen.

### Bezugszeichenliste

- 1: Tank
- 2: Boil-off-Management-System
- 3: Katalysator
- 4: passiver Metallhydrid-Heizer
- 5: Überdruckventil, erstes Überdruckventil
- 6: Überdruckventil, zweites Überdruckventil
- 10: Tankanordnung

- p: Druck
- T: Temperatur

## Patentansprüche

1. Tankanordnung (10), umfassend einen Tank (1) für flüssigen Wasserstoff, ein Boil-off-Management-System (2) mit einem Katalysator (3), ein erstes Überdruckventil (5), und einen Heizer, der wasserstoffseitig hinter dem ersten Überdruckventil (5) angeordnet und thermisch mit dem Katalysator (3) verbunden ist, wobei das erste Überdruckventil (5) dazu konfiguriert ist, bei Überschreitung eines vorgegebenen ersten Drucks zu öffnen, **dadurch gekennzeichnet, dass** der Heizer als ein passiver Metallhydrid-Heizer (4) ausgebildet ist, der ein Metallhydrid enthält, wobei ein zweites Überdruckventil (6) zwischen dem ersten Überdruckventil (5) und dem Katalysator (3) angeordnet ist, wobei das zweite Überdruckventil (6) dazu konfiguriert ist, bei Überschreitung eines vorgegebenen zweiten Drucks zu öffnen, der höher als der erste Druck ist.

2. Tankanordnung (10) nach Anspruch 1,
**dadurch gekennzeichnet, dass** das Boil-off-Management-System (2) ohne eine elektrische Heizmöglichkeit ausgebildet ist.

3. Tankanordnung (10) nach einem der Ansprüche 1 oder 2,
**dadurch gekennzeichnet, dass** der Heizer dazu konfiguriert ist Wärme mit dem Katalysator (3) über Wärmeleitung auszutauschen.

4. Tankanordnung (10) nach einem der vorhergehenden Ansprüche,
**dadurch gekennzeichnet, dass** der vorgegebene erste Druck 16 bar bis 25 bar, insbesondere 20 bar, beträgt.

5. Tankanordnung (10) nach einem der vorhergehenden Ansprüche,
**dadurch gekennzeichnet, dass** der vorgegebene zweite Druck 0,1 bar bis 5 bar über dem ersten Druck beträgt.

6. Verfahren zum Betrieb einer Tankanordnung (10), umfassend einen Tank (1) für flüssigen Wasserstoff, ein Boil-off-Management-System (2) mit einem Katalysator (3) und einen Heizer, der wasserstoffseitig hinter einem ersten Überdruckventil (5) angeordnet und thermisch mit dem Katalysator (3) verbunden ist, wobei das erste Überdruckventil (5) bei Überschreitung eines vorgegebenen ersten Drucks öffnet und Wasserstoff zum Heizer leitet,
**dadurch gekennzeichnet, dass** der Heizer als ein passiver Metallhydrid-Heizer (4) ausgebildet ist, der ein Metallhydrid enthält, das reversibel mit Wasserstoff reagiert, wobei ein zweites Überdruckventil (6) zwischen dem ersten Überdruckventil (5) und dem Katalysator (3) angeordnet ist, wobei das zweite Überdruckventil (6) bei Überschreitung eines vorgegebenen zweiten Drucks, der höher als der erste Druck ist, öffnet und Wasserstoff zum Katalysator (3) leitet.

7. Verfahren nach Anspruch 6,
**dadurch gekennzeichnet, dass** im Boil-off-Management-System (2) keine elektrische Heizung erfolgt.

8. Verfahren nach Anspruch 6 oder 7,
**dadurch gekennzeichnet, dass** der vorgegebene erste Druck 16 bar bis 25 bar, insbesondere 20 bar, beträgt und/oder dass der vorgegebene zweite Druck 0,1 bar bis 5 bar über dem ersten Druck beträgt.

9. Verfahren zum Einbau eines Metallhydrids in eine Tankanordnung (10) nach einem der Ansprüche 1 bis 5,
**dadurch gekennzeichnet, dass** das Metallhydrid vor einer Aktivierung unter Luftkontakt eingebaut wird und die Aktivierung im eingebauten Zustand erfolgt, wobei entweder ein Vakuum appliziert oder mit Inertgas gespült wird, um Luft zu entfernen, und dann ein Druckwechsel mit Wasserstoff und/oder ein Temperaturwechsel in Vakuum oder Wasserstoffatmosphäre für die Aktivierung vorgenommen wird.

10. Verfahren zum Einbau eines Metallhydrids in eine Tankanordnung (10) nach einem der Ansprüche 1 bis 5,
**dadurch gekennzeichnet, dass** beide Überdruckventile (5, 6) geschlossen werden und anschließend ein aktiviertes Metallhydrid unter einer Inertatmosphäre eingebaut wird, wobei Leitungen dann evakuiert und gespült werden, bevor die Überdruckventile (5, 6) zum Metallhydrid geöffnet und der passive Metallhydrid-Heizer (4) gespült wird, um das Intertgas zu entfernen.

## Claims

1. A tank arrangement (10) comprising a tank (1) for liquid hydrogen, a boil-off management system (2) having a catalytic converter (3), a first overpressure valve (5) and a heater that is arranged downstream of a first overpressure valve (5) on the hydrogen side and is connected thermally to the catalytic converter (3), the first overpressure valve (5) being configured to open when a predetermined first pressure is exceeded,
**characterised in that** the heater is configured as a passive metal hydride heater (4) containing a metal hydride, a second overpressure valve (6) being arranged between the first overpressure valve (5) and the catalytic converter (3), the second overpressure valve (6) being configured to open when a predetermined second pressure that is higher than the first pressure is exceeded.

2. A tank arrangement (10) according to claim 1,
**characterised in that** the boil-off management system (2) is configured without an electric heating option.

3. A tank arrangement (10) according to any one of claims 1 or 2, **characterised in that** the heater is configured to exchange heat with the catalytic converter (3) via thermal conduction.

4. A tank arrangement (10) according to any one of the preceding claims, **characterised in that** the predetermined first pressure is 16 bar to 25 bar, in particular 20 bar.

5. A tank arrangement (10) according to any one of the preceding claims, **characterised in that** the predetermined second pressure is 0.1 bar to 5 bar above the first pressure.

6. A method for operating a tank arrangement (10) comprising a tank (1) for liquid hydrogen, a boil-off management system (2) having a catalytic converter (3), and a heater that is arranged downstream of a first overpressure valve (5) on the hydrogen side and is thermally connected to the catalytic converter (3), the first overpressure valve (5) opening when a predetermined first pressure is exceeded and conducting hydrogen to the heater,
**characterised in that** the heater is configured as a passive metal hydride heater (4) containing a metal hydride that reacts reversibly with hydrogen, a second overpressure valve (6) being arranged between the first overpressure valve (5) and the catalytic converter (3), the second overpressure valve (6) opening when a predetermined second pressure that is higher than the first pressure is exceeded and conducting hydrogen to the catalytic converter (3).

7. A method according to claim 6,
**characterised in that** no electric heating takes place in the boil-off management system (2).

8. A method according to claim 6 or 7,
**characterised in that** the predetermined first pressure is 16 bar to 25 bar, in particular 20 bar, and/or that the predetermined second pressure is 0.1 bar to 5 bar above the first pressure.

9. A method for installing a metal hydride in a tank arrangement (10) according to any one of claims 1 to 5,
**characterised in that** the metal hydride is installed in contact with the air before activation, and that activation takes placed in the installed state, either a vacuum being applied or inert gas rinsing being carried out in order to remove the air, and a pressure change then being carried out with hydrogen and/or a temperature change being carried out in a vacuum or a hydrogen atmosphere for activation.

10. A method for installing a metal hydride in a tank arrangement (10) according to any one of claims 1 to 5,
**characterised in that** both overpressure valves (5, 6) are closed and an activated metal hydride is then installed in an inert atmosphere, lines then being evacuated and rinsed before the overpressure valves (5, 6) are opened to the metal hydride and the passive metal hydride heater (4) is rinsed in order to remove the insert gas.

## Revendications

1. Ensemble réservoir (10) comprenant un réservoir (1) pour de l'hydrogène liquide, un système de gestion des gaz d'évaporation (2) comportant un catalyseur (3), une première soupape de surpression (5) et un dispositif de chauffage qui est disposé, du côté de l'hydrogène, en aval de la première soupape de surpression (5) et raccordé thermiquement au catalyseur (3), la première soupape de surpression (5) étant conçue pour s'ouvrir en cas de dépassement d'une première pression prédéfinie, **caractérisé en ce que** le dispositif de chauffage est conçu sous la forme d'un dispositif de chauffage passif à hydrure métallique (4) qui contient un hydrure métallique, une deuxième soupape de surpression (6) étant disposée entre la première soupape de surpression (5) et le catalyseur (3), la deuxième soupape de surpression (6) étant conçue pour s'ouvrir en cas de dépassement d'une deuxième pression prédéfinie, qui est supérieure à la première pression.

2. Ensemble réservoir (10) selon la revendication 1,
**caractérisé en ce que** le système de gestion des gaz d'évaporation (2) est conçu sans dispositif de chauffage électrique.

3. Ensemble réservoir (10) selon l'une quelconque des revendications 1 ou 2, **caractérisé en ce que** le dispositif de chauffage est configuré pour échanger de la chaleur avec le catalyseur (3) par conduction thermique.

4. Ensemble réservoir (10) selon l'une quelconque des revendications précédentes, **caractérisé en ce que** la première pression prédéfinie est comprise entre 16 bars et 25 bars, en particulier 20 bars.

5. Ensemble réservoir (10) selon l'une quelconque des revendications précédentes, **caractérisé en ce que** la deuxième pression prédéfinie est supérieure de 0,1 bar à 5 bars à la première pression.

6. Procédé de fonctionnement d'un ensemble réservoir (10) comprenant un réservoir (1) pour l'hydrogène liquide, un système de gestion des gaz d'évaporation (2) comportant un catalyseur (3) et un dispositif de chauffage, qui est disposé du côté de l'hydrogène en aval d'une première soupape de surpression (5) et qui est relié thermiquement au catalyseur (3), la première soupape de surpression (5) s'ouvrant lorsqu'une première pression prédéfinie est dépassée et acheminant l'hydrogène vers le dispositif de chauffage, **caractérisé en ce que** le dispositif de chauffage est conçu sous la forme d'un dispositif de chauffage passif à hydrure métallique (4) contenant un hydrure métallique qui réagit réversiblement avec l'hydrogène, une deuxième soupape de surpression (6) étant disposée entre la première soupape de surpression (5) et le catalyseur (3), la deuxième soupape de surpression (6) s'ouvrant lorsqu'une deuxième pression prédéfinie, supérieure à la première pression, est dépassée, et acheminant de l'hydrogène vers le catalyseur (3).

7. Procédé selon la revendication 6,
**caractérisé en ce qu'**aucun chauffage électrique n'est utilisé dans le système de gestion des gaz d'évaporation (2).

8. Procédé selon la revendication 6 ou 7, 9,
**caractérisé en ce que** la première pression prédéfinie est comprise entre 16 bars et 25 bars, en particulier 20 bars, et/ou **en ce que** la deuxième pression prédéfinie est supérieure à la première pression de 0,1 bar à 5 bars.

9. Procédé d'installation d'un hydrure métallique dans un ensemble réservoir (10) selon l'une quelconque des revendications 1 à 5,
**caractérisé en ce que** l'hydrure métallique est intégré avant son activation au contact de l'air et **en ce que** l'activation s'effectue une fois que l'hydrure est intégré, dans lequel, afin d'éliminer l'air, soit un vide est appliqué, soit une purge au gaz inerte est effectuée, puis, pour l'activation, une variation de pression avec de l'hydrogène et/ou une variation de température est réalisée sous vide ou sous atmosphère d'hydrogène.

10. Procédé d'installation d'un hydrure métallique dans un ensemble réservoir (10) selon l'une quelconque des revendications 1 à 5,
**caractérisé en ce que** les deux soupapes de surpression (5, 6) sont fermées, puis un hydrure métallique activé est introduit sous atmosphère inerte, dans lequel des conduites sont mises sous vide et purgées avant que les soupapes de surpression (5, 6) ne soient ouvertes en direction de l'hydrure métallique et que le dispositif de chauffage passif à hydrure métallique (4) ne soit purgé afin d'éliminer le gaz interne.
